# EUROPÄISCHE PATENTANMELDUNG

(11) **EP 4 434 692 A1**
(43) Veröffentlichungstag der Anmeldung: **25.09.2024**
(21) Anmeldenummer: 23213875.0
(22) Anmeldetag: 04.12.2023
(51) Int. Cl.: B25J 11/00, B25J 15/04, B25J 15/00, B60L 53/35

(54) **HALTERUNGSVORRICHTUNG ZUR HALTERUNG EINER ANSCHLUSSLEITUNG AN EINEM BEWEGLICHEN ROBOTERARM**

(30) Priorität: 23.03.2023 DE 202023000694 U
(71) Anmelder: Klose & Oechsle GmbH, 40547 Düsseldorf (DE)
(72) Erfinder: Oechsle, Oliver, 40547 Düsseldorf (DE); Weissflog, Tobias Eric, 13250 Saint Chamas (FR)
(74) Vertreter: Isarpatent

(57) **Zusammenfassung**

Halterungsvorrichtung (1) zur Halterung einer Anschlussleitung (2) an einem beweglichen Roboterarm (3),
wobei die Halterungsvorrichtung (1) ein erstes Bauteil (11a) aufweist, welches an seiner ersten Stirnseite einen Einführkonus (4) und an seiner gegenüberliegenden zweiten Stirnseite einen daran angebrachten Befestigungsflansch (5) zur Befestigung des ersten Bauteils (11a) an den beweglichen Roboterarm (3) hat, wobei das zweite Bauteil (11b) der Halterungsvorrichtung (1) an seiner ersten Stirnseite eine Einführaufnahme (6) zur selbstzentrierenden Aufnahme des Einführkonus (4) des ersten Bauteils (11a) der Halterungsvorrichtung (1) und an seiner zweiten Stirnseite eine erste Anschluss-Schnittstelle für eine Anschlussbuchse (7) hat, wobei das zweite Bauteil (11b) der Halterungsvorrichtung (1) seitlich eine zweite Anschluss-Schnittstelle für die Anschlussleitung (2) aufweist.

## Beschreibung

Die Erfindung betrifft eine Halterungsvorrichtung zur Halterung einer Anschlussleitung an einem beweglichen Roboterarm und insbesondere eine maschinelle Wechselvorrichtung für Anschlussleitungen.

Anschlussleitungen können ein Gerät mit notwendigen Ressourcen, insbesondere mit elektrischer Energie, versorgen. Beispielsweise kann ein Elektrofahrzeug über ein Ladekabel elektrische Energie von einer Ladesäule beziehen. Üblicherweise führt der Fahrer eines Elektrofahrzeuges hierzu manuell einen Stecker einer elektrischen Anschlussleitung in eine entsprechende Anschlussbuchse des Elektrofahrzeugs zum Laden einer Fahrzeugbatterie des Fahrzeuges ein.

Fahrzeuge mit Verbrennungsmotoren können über einen Schlauch einer Anschlussleitung mit Kraftstoff, beispielsweise mit Benzin oder Wasserstoff, betankt werden. Zum Betanken eines Fahrzeuges führt der Nutzer an einer Zapfsäule eine Zapfpistole in einen Tankstutzen eines Fahrzeugs ein. Eine Zapfsäule bzw. Tanksäule ist ein Apparat an einer Tankstelle, mit dem ein Kraftstoff, fallweise auch ein Zusatzstoff zur Abgasnachbehandlung, in das zu betankende Fahrzeug eingefüllt wird. Das Zapfventil - umgangssprachlich auch Zapfpistole genannt - ist über einen Schlauch mit der Zapfsäule verbunden. Über das Zapfventil wird der Kraftstoff in den Tank eines Land-, Wasser- oder Luftfahrzeuges gefüllt. Der Tankstutzen ist an dem Fahrzeug derart positioniert, dass ein Nutzer einen Hahn, aus dem der Kraftstoff von der Zapfsäule bezogen wird, mit einer Hand bequem einführen kann.

Die herkömmlichen Stecker einer elektrischen Anschlussleitung sowie Zapfpistolen von Kraftstoffschläuchen erfüllen ergonomischen Bedürfnisse, d.h. sie eignen sich zu einer manuellen Bedienung durch einen Nutzer. Herkömmliche Stecker und Zapfpistolen sind allerdings derart geformt, dass sie maschinell nur schwer durch eine Greifeinrichtung eines Roboterarms greifbar und in eine elektrische Anschlussbuchse oder einen Tankstutzen einführbar sind.

Es ist daher eine Aufgabe der vorliegenden Erfindung eine Vorrichtung zur Halterung einer Anschlussleitung zu schaffen, die es erlaubt eine Anschlussleitung maschinell aufzunehmen und in eine Anschlussbuchse einzuführen.

Diese Aufgabe wird durch eine Halterungsvorrichtung mit den im Patentanspruch 1 angegebenen Merkmalen gelöst.

Die Erfindung schafft demnach eine Halterungsvorrichtung zur Halterung einer Anschlussleitung an einem beweglichen Roboterarm, wobei die Halterungsvorrichtung ein erstes Bauteil aufweist, welches an seiner ersten Stirnseite einen Einführkonus und an seiner gegenüberliegenden zweiten Stirnseite einen daran angebrachten Befestigungsflansch zur Befestigung des ersten Bauteils an den beweglichen Roboterarm hat, wobei das zweite Bauteil der Halterungsvorrichtung an seiner ersten Stirnseite eine Einführaufnahme zur selbstzentrierenden Aufnahme des Einführkonus des ersten Bauteils der Halterungsvorrichtung und an seiner zweiten Stirnseite eine erste Anschluss-Schnittstelle für eine Anschlussbuchse hat, wobei das zweite Bauteil der Halterungsvorrichtung seitlich eine zweite Anschluss-Schnittstelle für die Anschlussleitung aufweist.

Die Halterungsvorrichtung ermöglicht ein Greifen und Einführen von Anschlussleitungen für Roboter gestützte Steckvorgänge zur Herstellung elektrischer Kabelverbindungen oder auch zur Herstellung von Schlauchverbindungen.

Bei einer möglichen Ausführungsform der Halterungsvorrichtung enthält der Einführkonus des ersten Bauteils einen steuerbaren Verriegelungsmechanismus zur mechanischen Verriegelung des ersten Bauteils der Halterungsvorrichtung mit dem zweiten Bauteil der Halterungsvorrichtung enthält.

Bei einer möglichen Ausführungsform der Halterungsvorrichtung ist die an der zweiten Stirnseite des zweiten Bauteils vorgesehene erste Anschluss-Schnittstelle in einem Anschuss-Stecker integriert, der durch den beweglichen Roboterarm automatisch in die Anschlussbuchse hineinsteckbar oder aus der Anschlussbuchse herausziehbar ist.

Bei einer möglichen Ausführungsform der Halterungsvorrichtung weist die Anschlussleitung ein elektrisches Anschlusskabel auf.

Bei einer möglichen Ausführungsform der Halterungsvorrichtung weist die Anschlussleitung ein hydraulisches Anschlusskabel auf.

Bei einer möglichen Ausführungsform der Halterungsvorrichtung weist die Anschlussleitung ein pneumatisches Anschlusskabel auf.

Bei einer möglichen Ausführungsform der Halterungsvorrichtung weist das elektrische Anschlusskabel ein Stromkabel oder ein Übertagungskabel zur Übermittlung von Daten oder Signalen auf.

Bei einer möglichen Ausführungsform der Halterungsvorrichtung weist die Anschlussleitung einen Schlauch zum Transport einer Flüssigkeit oder eines Gases aufweist.

Bei einer möglichen Ausführungsform der Halterungsvorrichtung, weist das zweite Bauteil der Halterungsvorrichtung einen Schaft zur manuellen Betätigung der Halterungsvorrichtung auf.

Bei einer möglichen Ausführungsform der Halterungsvorrichtung ist an der ersten Anschluss-Schnittstelle des zweiten Bauteiles der Halterungsvorrichtung ein Anschlussadapter anbringbar ist.

Bei einer möglichen Ausführungsform der Halterungsvorrichtung weist der innerhalb des Einführkonus des ersten Bauteils enthaltene steuerbare Verriegelungsmechanismus ausfahrbare Rastbolzen auf, die nach Einführung des Einführkonus des ersten Bauteils in die Einführaufnahme des zweiten Bauteils in entsprechende Rastbolzenbuchsen der Einführaufnahme des zweiten Bauteils zur Verriegelung des ersten Bauteils mit dem zweiten Bauteil einfahrbar sind.

Bei einer möglichen Ausführungsform der Halterungsvorrichtung, sind die ausfahrbaren Rastbolzen des Verriegelungsmechanismus elektromagnetisch betätigbar.

Bei einer möglichen Ausführungsform der Halterungsvorrichtung sind die die ausfahrbaren Rastbolzen des Verriegelungsmechanismus durch einen Servomotor oder durch einen Schrittmotor betätigbar.

Bei einer möglichen Ausführungsform der Halterungsvorrichtung sind die ausfahrbaren Rastbolzen des Verriegelungsmechanismus durch Federkraft einer mechanischen Feder oder durch Drucckraft betätigbar.

Bei einer möglichen Ausführungsform der Halterungsvorrichtung sind die ausfahrbaren Rastbolzen des Verriegelungsmechanismus manuell betätigbar.

Bei einer möglichen Ausführungsform der Halterungsvorrichtung sind die ausfahrbaren Rastbolzen des Verriegelungsmechanismus hydraulisch oder pneumatisch betätigbar.

Bei einer möglichen Ausführungsform der Halterungsvorrichtung wird eine erfolgte Verriegelung und/oder eine Stellung der Rastbolzen des Verriegelungsmechanismus durch eine Erfassungseinheit des Verriegelungsmechanismus erfasst.

Bei einer möglichen Ausführungsform der Halterungsvorrichtung ist die Anschlussbuchse eine elektrische Anschlussbuchse für Wechselstrom (AC).

Bei einer möglichen Ausführungsform der Halterungsvorrichtung ist die elektrische Anschlussbuchse für Wechselstrom (AC) eine Typ2-Wechselstromanschlussbuchse.

Bei einer möglichen Ausführungsform der Halterungsvorrichtung ist die Anschlussbuchse eine elektrische Anschlussbuchse für Gleichstrom (DC).

Bei einer möglichen Ausführungsform der Halterungsvorrichtung ist die elektrische Anschlussbuchse für Gleichstrom (DC) eine CCS-Gleichstromanschlussbuchse.

Bei einer möglichen Ausführungsform der Halterungsvorrichtung ist die an dem Roboterarm befestige Halterungsvorrichtung um ihre Längsachse herum drehbar.

Bei einer möglichen Ausführungsform der Halterungsvorrichtung weist der Einführkonus des ersten Bauteils der Halterungsvorrichtung eine kegelförmige Mantelfläche und eine ebene Mantelfläche auf.

Bei einer möglichen Ausführungsform der Halterungsvorrichtung sind ausfahrbare Rastbolzen eines Verriegelungsmechanismus an der ebenen Mantelfläche des Einführkonus des ersten Bauteils der Halterungsvorrichtung vorgesehen.

Die Erfindung schafft ferner gemäß einem weiteren Aspekt einen Roboter mit einem Roboterarm, wobei an dem Roboterarm des Roboters ein erstes Bauteil der erfindungsgemäßen Halterungsvorrichtung befestigt ist.

Bei einer möglichen Ausführungsform des Roboters weist der Roboter eine Steuerung auf, wobei die Steuerung des Roboters das an dem Roboterarm des Roboters befestigte erste Bauteil der Halterungsvorrichtung in das zweite Bauteil der Halterungsvorrichtung automatisch einführt, welches an einem vorderen Ende von mindestens einer auswählbaren Anschlussleitung vorgesehen ist.

Bei einer möglichen Ausführungsform des Roboters steuert die Steuerung des Roboters nach dem Einführen des ersten Bauteils der Halterungsvorrichtung in das zweite Bauteil der Halterungsvorrichtung eine Bewegung des Roboterarmes zum Einstecken des an dem zweiten Bauteil der Halterungsvorrichtung vorgesehenen Anschluss-Steckers in eine Anschlussbuchse oder zum Herausziehen des an dem zweiten Bauteil der Halterungsvorrichtung vorgesehenen Anschluss-Steckers aus einer Anschlussbuchse.

Bei einer möglichen Ausführungsform des Roboters wird der Anschluss-Stecker in eine die Anschlussbuchse eingesteckt oder aus einer Anschlussbuchse herausgezogen, die an einem Fahrzeug vorgesehen ist.

Bei einer möglichen Ausführungsform des Roboters hat der Roboter Sensoren zur Erkennung einer Position der mindestens einen auswählbaren Anschlussleitung und/oder Sensoren zur Erkennung einer Position der Anschlussbuchse und/oder Sensoren zur Erkennung eines Fahrzeugtyps des Fahrzeuges.

Bei einer möglichen Ausführungsform des Roboters wählt die Steuerung des Roboters eine Anschlussleitung in Abhängigkeit des erkannten Fahrzeugtyps des Fahrzeuges aus und führt das an dem Roboterarm des Roboters befestigte erste Bauteil der Halterungsvorrichtung in das zweite Bauteil der Halterungsvorrichtung der ausgewählten Anschlussleitung automatisch ein, welches an einem vorderen Ende der auswählten Anschlussleitung vorgesehen ist.

Bei einer möglichen Ausführungsform des Roboters weisen die auswählbaren Anschlussleitungen elektrische Anschlussleitungen, insbesondere Gleichstromanschlussleitungen oder Wechselstromanschlussleitungen, oder Betankungs-Anschlussleitungen zum Betanken eines Kraftstofftanks des Fahrzeugs mit einem Kraftstoff auf.

Bei einer möglichen Ausführungsform des Roboters ist der Roboter selbstfahrend ausgebildet und ist durch die Steuerung des Roboters an eine die erkannte Position des Fahrzeuges und zu der erkannten Position der Anschlussbuchse des Fahrzeuges fahrbar.

Die Erfindung schafft gemäß einem weiteren Aspekt ein Fahrzeug mit einem Roboter, der einen Roboterarm aufweist, wobei an dem Roboterarm des Roboters ein erstes Bauteil der erfindungsgemäßen Halterungsvorrichtung befestigt ist.

Im Weiteren werden mögliche Ausführungsformen der verschieden Aspekte der Erfindung unter Bezugnahme auf die beigefügten Figuren näher beschrieben.

Es zeigen:
Fig.1 eine schematische Darstellung einer möglichen Ausführungsform einer erfindungsgemäßen Halterungsvorrichtung, die an einem Roboterarm eines Roboters befestigt ist;
Fig.2 eine weitere Darstellung einer möglichen Ausführungsform einer erfindungsgemäßen Halterungsvorrichtung, die an einem Roboterarm eines Roboters befestigt ist;
Fig.3 eine weitere Darstellung einer möglichen Ausführungsform einer erfindungsgemäßen Halterungsvorrichtung;
Fig.4 eine weitere Darstellung einer möglichen Ausführungsform einer erfindungsgemäßen Halterungsvorrichtung für eine DC- Anschlussleitung;
Fig.5 eine weitere Darstellung einer möglichen Ausführungsform einer erfindungsgemäßen Halterungsvorrichtung für eine AC- Anschlussleitung;
Fig.6 eine Explosionsdarstellung eines ersten Bauteils einer erfindungsgemäßen Halterungsvorrichtung;
Fig.7 eine Ansicht des in Fig.6 dargestellten ersten Bauteils der erfindungsgemäßen Halterungsvorrichtung von schräg vorne.
Fig.8 eine weitere Darstellung einer möglichen Ausführungsform einer erfindungsgemäßen Halterungsvorrichtung für einen Schlauch.

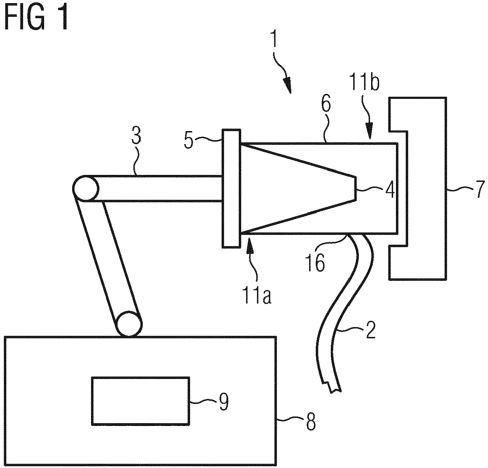

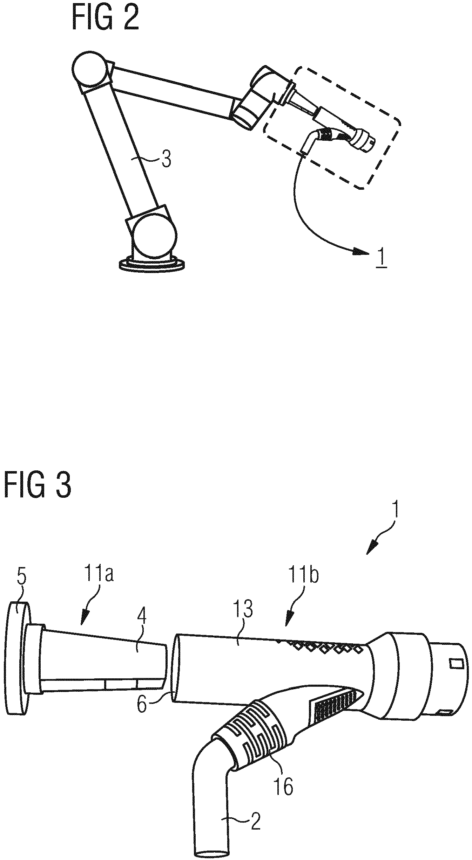

Die Figuren 1, 2 zeigen schematisch eine Halterungsvorrichtung 1 gemäß einem ersten Aspekt der Erfindung. Die Halterungsvorrichtung 1 ist zur Halterung einer Anschlussleitung 2 an einem beweglichen Roboterarm 3 eines Roboters 8 vorgesehen.

Die Halterungsvorrichtung 1 weist ein erstes Bauteil 11a auf, welches an seiner ersten Stirnseite (in Fig.1 nach rechts zeigenden Stirnseite) einen Einführkonus 4 und an seiner gegenüberliegenden zweiten Stirnseite (in Fig.1 nach links zeigenden Stirnseite) einen daran angebrachten Befestigungsflansch 5 zur Befestigung des ersten Bauteils 11a an den beweglichen Roboterarm 3 des Roboters 8 hat.

Das zweite Bauteil 11b der Halterungsvorrichtung 1 hat an seiner ersten Stirnseite (in Fig.1 nach links zeigenden Stirnseite) eine Einführaufnahme 6 zur selbstzentrierenden Aufnahme des Einführkonus 4 des ersten Bauteils 11a der Halterungsvorrichtung 1 und an seiner zweiten Stirnseite (in Fig.1 nach rechts zeigenden Stirnseite) eine erste Anschluss-Schnittstelle für eine Anschlussbuchse 7. Die erste Anschluss-Schnittstelle ist vorzugsweise eine genormte Anschluss-Schnittstelle. Die in Fig. 1 dargestellte Anschlussbuchse 7 kann an einem Fahrzeug vorgesehen sein.

Das zweite Bauteil 11b der Halterungsvorrichtung 1 weist seitlich eine zweite Anschluss-Schnittstelle für die Anschlussleitung 2 auf, wie in Fig.3 dargestellt. Die zweite Anschluss-Schnittstelle kann trennbar oder untrennbar ausgebildet sein.

Der Roboterarm 3 ist bei einer möglichen Ausführungsform an einem Roboter 8 angebracht, der über eine Steuerung 9 verfügt, wie in Fig.1 schematisch dargestellt ist. Die in Fig. 1 dargestellte Halterungsvorrichtung 1 ermöglicht ein Greifen und Einführen von Anschlussleitungen 2 für Roboter gestützte Steckvorgänge zur Herstellung elektrischer Kabelverbindungen oder auch zur Herstellung von Schlauchverbindungen.

Bei einer möglichen Ausführungsform der Halterungsvorrichtung 1 enthält der Einführkonus 4 des ersten Bauteils 11a einen steuerbaren Verriegelungsmechanismus 11c, der eine mechanischen Verriegelung des ersten Bauteils 11a der Halterungsvorrichtung 1 mit dem zweiten Bauteil 11b der Halterungsvorrichtung 1 ermöglicht.

Bei einer möglichen Ausführungsform der Halterungsvorrichtung 1 ist die an der zweiten Stirnseite des zweiten Bauteils 11b vorgesehene erste Anschluss-Schnittstelle in einem Anschuss-Stecker 10 des zweiten Bauteils 11b integriert, der durch den beweglichen Roboterarm 3 gesteuert durch die Steuerung 9 des Roboters 8 automatisch in die Anschlussbuchse 7 hineinsteckbar oder aus der Anschlussbuchse 7 herausziehbar ist.

Bei einer möglichen Ausführungsform der Halterungsvorrichtung 1 weist die Anschlussleitung 2 ein elektrisches Anschlusskabel auf. Bei einer möglichen Ausführungsform der Halterungsvorrichtung 1 weist das elektrische Anschlusskabel der Anschlussleitung 2 ein Stromkabel und/oder ein Übertagungskabel zur Übermittlung von Daten oder Signalen auf. Über eine Kommunikationsschnittstelle kann die Steuerung 9 des Roboters 8 nach dem Einstecken des zweiten Bauteils 11b der Halterungsvorrichtung 1 in die Anschlussbuchse 7 mit einer internen Steuerung des Fahrzeugs kommunizieren und Daten austauschen.

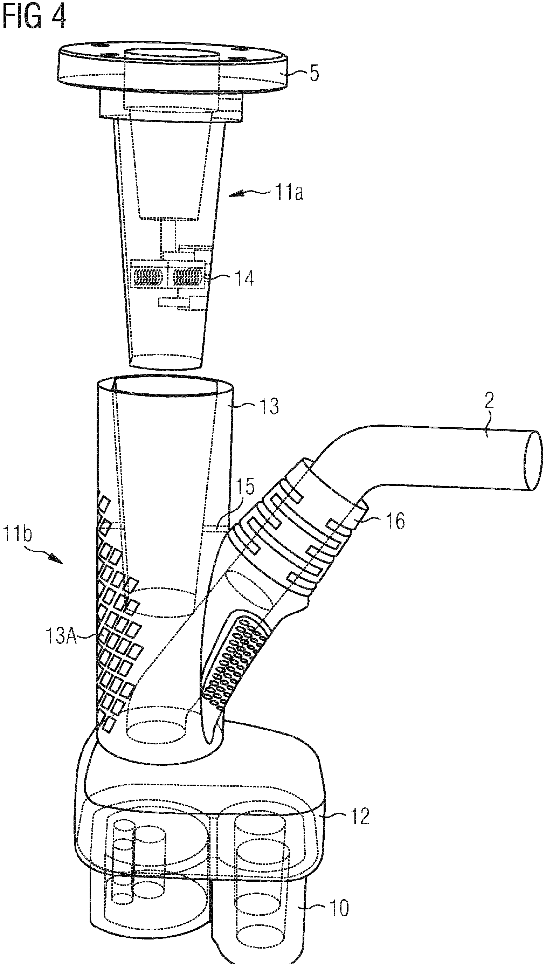

Bei der Ausführungsform gemäß Fig. 4 ist der Anschluss-Stecker 10 des zweiten Bauteils 11b der Halterungsvorrichtung 1 ein CCS-Stecker für Gleichstrom (DC). Der CCS Stecker 10 ist über eine fest integrierten CCS-Adapter 12 an dem zweiten Bauteil 11b der Halterungsvorrichtung 1 angebracht.

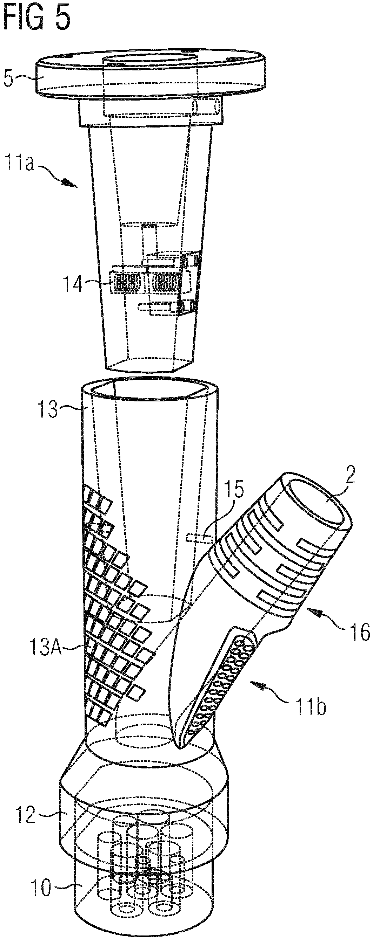

Bei der Ausführungsform gemäß Fig. 5 ist der Anschluss-Stecker 10 des zweiten Bauteils 111b der Halterungsvorrichtung 1 ein Typ2-Stecker für Wechselstromstrom (AC). Der Typ2 Stecker 10 ist über eine fest integrierten Typ2-Adapter 12 an dem zweiten Bauteil 11b der Halterungsvorrichtung 1 angebracht.

Bei einer weiteren möglichen Ausführungsform der Halterungsvorrichtung 1 weist die Anschlussleitung 2 ein hydraulisches Anschlusskabel auf. Bei einer weiteren möglichen alternativen Ausführungsform der Halterungsvorrichtung 1 weist die Anschlussleitung 2 ein pneumatisches Anschlusskabel auf.

Bei einer weiteren möglichen Ausführungsform der Halterungsvorrichtung 1 weist die Anschlussleitung 2 einen Schlauch zum Transport einer Flüssigkeit oder eines Gases auf. Bei der Flüssigkeit kann es sich um einen Brennstoff zum Betanken eines Tanks des Fahrzeugs handeln, beispielsweise Benzin, Kerosin oder Dieselkraftstoff. Weiterhin kann es sich bei der Flüssigkeit beispielsweise auch um Wasser, Milch oder eine sonstige Flüssigkeit handeln, die in einem Transporttank des Fahrzeugs befördert wird. Es kann sich bei der Flüssigkeit auch um verflüssigten Wasserstoff H2 handeln. Bei dem über den Schlauch der Anschlussleitung 2 transportierten Gas kann es sich um gasförmigen Wasserstoff H2 oder ein sonstiges Gas handeln, beispielsweise Druckluft.

Bei einer möglichen Ausführungsform der Halterungsvorrichtung 1, weist das zweite Bauteil 11b der Halterungsvorrichtung 1 einen Schaft 13 zur manuellen Betätigung der Halterungsvorrichtung 1 auf, wie in Fig. 3 dargestellt.

Der Schaft 13 des zweiten Bauteils 11b weist vorzugsweise eine Gripp-oberfläche 13A für eine manuelle Betätigung auf, wie in Fig. 4, 5 dargestellt. Das zweite Bauteil 11b hat seitlich eine Kabeleinführung 16 zur Einführung einer Anschlussleitung 2 bzw. eines Kabels oder Schlauches. Die Kabeleinführung 16 ist bei einer ersten Ausführungsform derart gestaltet, dass die Anschlussleitung 2 fest an dem ersten Bauteil 11b angebracht ist. Die Kabeleinführung 16 ist bei einer zweiten Ausführungsform derart gestaltet, dass die Anschlussleitung 2 an dem ersten Bauteil 11b trennbar montiert ist.

Bei einer möglichen Ausführungsform der Halterungsvorrichtung 1 ist an der ersten Anschluss-Schnittstelle des zweiten Bauteiles 11b der Halterungsvorrichtung 1 ein Anschlussadapter anbringbar, wie in den Fig. 4, 5 dargestellt.

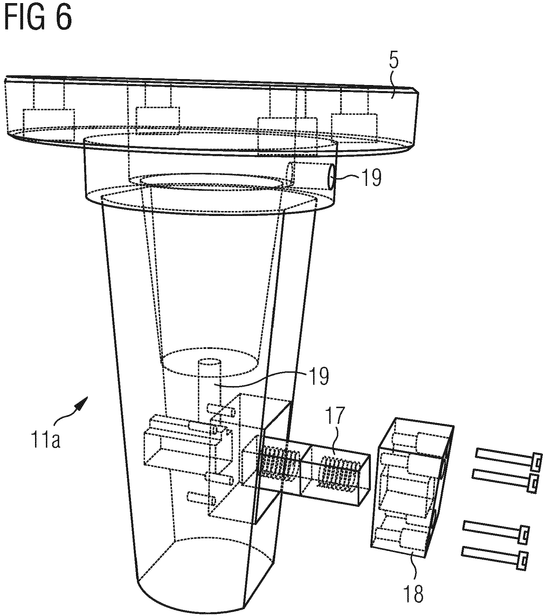

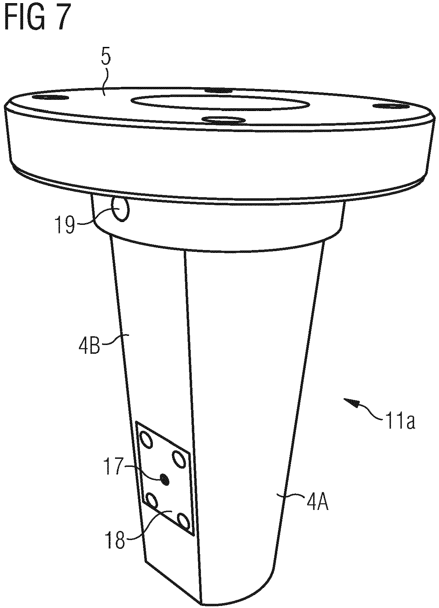

Bei einer möglichen Ausführungsform der Halterungsvorrichtung 1 weist der innerhalb des Einführkonus 4 des ersten Bauteils 11a enthaltene steuerbare Verriegelungsmechanismus 11c ausfahrbare Rastbolzen 14 auf, wie in den Fig. 6, 7 dargestellt. Die Rastbolzen 14 sind nach Einführung des Einführkonus 4 des ersten Bauteils 11a in die Einführaufnahme 6 des zweiten Bauteils 11b in entsprechende Rastbolzenbuchsen 15 der Einführaufnahme 6 des zweiten Bauteils 11b zur Verriegelung des ersten Bauteils 11a mit dem zweiten Bauteil 11b einfahrbar. Bei einer möglichen Ausführungsform der Halterungsvorrichtung 1, sind die ausfahrbaren Rastbolzen 14 des Verriegelungsmechanismus 11c elektromagnetisch betätigbar. Der Verriegelungsmechanismus 11c kann eine elektrisch steuerbare elektromagnetische Rastbolzen-Arretierung 17 aufweisen, wie in Fig. 6,7 dargestellt. Ferner kann eine Montageabdeckung 18 für die Bolzenmechanik vorgesehen sein. Neben dem Befestigungsflansch 5 kann ein Kabelkanal 19 für ein Steuerkabel vorgesehen ist, welches die Steuerung 9 mit dem Verriegelungsmechanismus 11c verbindet.

Bei einer weiteren möglichen Ausführungsform der Halterungsvorrichtung 1 sind die die ausfahrbaren Rastbolzen 14 des Verriegelungsmechanismus 11c durch einen steuerbaren Servomotor oder durch einen Schrittmotor betätigbar.

Bei einer weiteren möglichen Ausführungsform der Halterungsvorrichtung 1 sind die ausfahrbaren Rastbolzen 14 des Verriegelungsmechanismus 11c durch Federkraft einer mechanischen Feder oder durch Druckkraft betätigbar.

Bei einer weiteren möglichen Ausführungsform der Halterungsvorrichtung 1 sind die ausfahrbaren Rastbolzen 14 des Verriegelungsmechanismus 11c zusätzlich manuell betätigbar.

Bei einer weiteren möglichen Ausführungsform der Halterungsvorrichtung 1 sind die ausfahrbaren Rastbolzen 14 des Verriegelungsmechanismus 11c hydraulisch oder pneumatisch betätigbar.

Bei einer möglichen Ausführungsform der Halterungsvorrichtung 1 wird eine erfolgte Verriegelung und/oder eine Stellung der Rastbolzen 14 des Verriegelungsmechanismus 11c durch eine Erfassungseinheit des Verriegelungsmechanismus 11c erfasst und der Steuerung 9 gemeldet.

Bei einer möglichen Ausführungsform der Halterungsvorrichtung 1 ist die Anschlussbuchse 7 eine elektrische Anschlussbuchse für Wechselstrom (AC). In diese AC-Anschlussbuchse 7 wird beispielsweise der Stecker 10 des zweiten Bauteils 11b der Halterungsvorrichtung 1 gemäß Fig.5 mit Hilfe des roboterarmgeführten ersten Bauteils 11a der Halterungsvorrichtung 1 automatisch eingesteckt bzw. eingeführt Bei einer möglichen Ausführungsform der Halterungsvorrichtung 1 ist die elektrische Anschlussbuchse 7 für Wechselstrom (AC) eine Typ2-Wechselstromanschlussbuchse.

Bei einer möglichen Ausführungsform der Halterungsvorrichtung 1 ist die Anschlussbuchse 7 eine elektrische Anschlussbuchse für Gleichstrom (DC). In diese DC-Anschlussbuchse 7 wird beispielsweise der Stecker 10 des zweiten Bauteils 11b der Halterungsvorrichtung 1 gemäß Fig.4 mit Hilfe des roboterarmgeführten ersten Bauteils 11a der Halterungsvorrichtung 1 automatisch eingesteckt bzw. eingeführt. Bei einer möglichen Ausführungsform der Halterungsvorrichtung 1 ist die elektrische Anschlussbuchse 7 für Gleichstrom (DC) eine CCS-Gleichstromanschlussbuchse.

Bei einer möglichen Ausführungsform der Halterungsvorrichtung 1 ist die an dem Roboterarm 3 befestige Halterungsvorrichtung 1 um ihre Längsachse herum drehbar.

Bei einer möglichen Ausführungsform der Halterungsvorrichtung 1 weist der Einführkonus 4 des ersten Bauteils 11a der Halterungsvorrichtung 1 eine kegelförmige Mantelfläche 4A und eine ebene Mantelfläche 4B auf, wie in Fig.7 dargestellt.

Der Einführkonus 4 des ersten Bauteils 11a weist an der Mantelfläche 4A einen Einführwinkel von beispielsweise 10 bis 60 Winkelgrad relativ zu der Längsachse der Halterungsvorrichtung 1 auf. Die Einführaufnahme 6 des zweiten Bauteils 11b bildet einen konus-förmigen Trichter der formschlüssig zu dem Einführkonus 4 ausgebildet ist.

Das erste Bauteil 11b kann einen Kabelkanal 16 für ein Steuerkabel aufweisen, wie in Fig.6 dargestellt.

Bei einer möglichen Ausführungsform der Halterungsvorrichtung 1 sind ausfahrbare Rastbolzen 14 eines Verriegelungsmechanismus 11c an der ebenen Mantelfläche 4B des Einführkonus 4 des ersten Bauteils 11a der Halterungsvorrichtung 1 vorgesehen, wie in den Fig.6, 7 gezeigt.

Die Erfindung schafft ferner gemäß einem weiteren Aspekt einen Roboter 8 mit einem Roboterarm 3, wobei an dem Roboterarm 3 des Roboters 8 ein erstes Bauteil 11a der erfindungsgemäßen Halterungsvorrichtung 1 befestigt ist. Bei einer möglichen Ausführungsform des Roboters 8 weist der Roboter 8 eine Steuerung 9 auf. Die Steuerung 9 des Roboters 8 führt das an dem Roboterarm 3 des Roboters 8 befestigte erste Bauteil 11a der Halterungsvorrichtung 1 zunächst in das zweite Bauteil 11b der Halterungsvorrichtung 1 automatisch ein, welches an einem vorderen Ende von mindestens einer auswählbaren Anschlussleitung 2 vorgesehen ist.

Bei einer möglichen Ausführungsform des Roboters 8 steuert die Steuerung 9 des Roboters 8 nach dem Einführen des ersten Bauteils 11a der Halterungsvorrichtung 1 in das zweite Bauteil 11b der Halterungsvorrichtung 1 eine Bewegung des Roboterarmes 3 zum Einstecken des an dem zweiten Bauteil 11b der Halterungsvorrichtung 1 vorgesehenen Anschluss-Steckers 10 in eine Anschlussbuchse 7 oder zum Herausziehen des an dem zweiten Bauteil 11b der Halterungsvorrichtung 1 vorgesehenen Anschluss-Steckers 10 aus einer Anschlussbuchse 7.

Bei einer möglichen Ausführungsform des Roboters 8 wird der Anschluss-Stecker 10 in eine die Anschlussbuchse 7 eingesteckt oder aus einer Anschlussbuchse 7 herausgezogen, die an einem Fahrzeug vorgesehen ist.

Bei einer möglichen Ausführungsform des Roboters 8 hat der Roboter 8 Sensoren (in den Figuren nicht dargestellt) zur Erkennung einer Position der mindestens einen auswählbaren Anschlussleitung 2 und/oder Sensoren zur Erkennung einer Position der Anschlussbuchse 7 und/oder Sensoren zur Erkennung eines Fahrzeugtyps des Fahrzeuges. Die Sensoren umfassen vorzugsweise optische Sensoren, insbesondere Kameras, Lidar oder Radarsensoren. Die Bewegung des Roboterarmes 3 und das Betätigen der Halterungsvorrichtung 1 kann kameraüberwacht erfolgen, wobei eine oder mehrere Kameras Kamerabilder an eine Bilddatenverarbeitungseinheit der Robotersteuerung 9 liefern, die zur Steuerung der Bewegung des Roboterarmes 3, insbesosondere zur Ansteuerung von dessen Gelenken, und zur Betätigung der Bauteile 11a,11b ausgewertet werden.

Bei einer möglichen Ausführungsform des Roboters 8 wählt die Steuerung 9 des Roboters 8 in einem ersten Schritt S1 eine der an der Lade - oder Zapfsäule verfügbaren Anschlussleitungen 2 in Abhängigkeit eines sensorisch erkannten oder über ein Kommunikations-Schnittstelle gemeldeten Fahrzeugtyps des Fahrzeuges aus. Die Steuerung 9 führt dann in einem zweiten Schritt S2 das an dem Roboterarm 3 des Roboters 8 befestigte erste Bauteil 11a der Halterungsvorrichtung 1 in das zweite Bauteil 11b der Halterungsvorrichtung 1 der ausgewählten Anschlussleitung 2 automatisch ein und verriegelt die beiden Bauteile 11a, 11b miteinander durch Ansteuerung des Verriegelungsmechanismus 11c. Das zweite Bauteil 11b befindet sich vorzugsweise an einem vorderen Ende der im ersten Schritt auswählten Anschlussleitung 2. An einer Ladesäule oder Zapfsäule können nebeneinander verschiedene auswählbare Anschlussleitungen 2 vorgesehen sein. In einem dritten Schritt S3 wird die Halterungsvorrichtung 1 zu der Anschlussbuchse 7 geführt und der Stecker 10 des zweiten Bauteiles 11b in die Anschlussbuchse 7 automatisch eingesteckt.

Beispielsweise befinden sich an einer elektrischen Ladesäule in einer Kabel-Halterung der Ladesäule an definierten Positionen eine erste Anschlussleitung 2-1 für Gleichstrom (DC) und eine zweite Anschlussleitung 2-2 für Wechselstrom (AC).

Die Steuerung 9 wählt zunächst in einem ersten Schritt S1 eine der beiden verfügbaren Anschlussleitungen 2-1, 2-2 aus. Die Auswahl der Anschlussleitung 2 durch die Steuerung 9 des Roboters 8 kann gemäß mindestens einem Auswahlkriterium erfolgen, beispielsweise in Abhängigkeit eines sensorisch erkannten oder der Steuerung 9 über eine drahtlose Kommunikationsschnittstelle von einer Steuerung des Fahrzeugs gemeldeten Fahrzeugtyps.

Die Steuerung 9 führt dann in einem zweiten Schritt S2 den Einführkonus 4 des an dem Roboterarm 3 des Roboters 8 mittels des Befestigungsflansches 5 befestigten ersten Bauteils 11a der Halterungsvorrichtung 1 in die Einführaufnahme 6 des zweiten Bauteils 11b der Halterungsvorrichtung 1 der ausgewählten Anschlussleitung 2 automatisch ein. Dann werden die beiden Bauteile 11a,11b mittels des Verriegelungsmechanismus 11c miteinander verriegelt. Die erfolgreiche Verriegelung kann mit Hilfe eines Sensors an die Steuerung 9 gemeldet werden.

Die Steuerung 9 des Roboters 8 nimmt daraufhin in einem dritten Schritt S3 die ausgewählte Anschlussleitung 2 aus der Kabelhalterung der Ladesäule heraus und führt den Anschluss-Stecker 10 des mit der Anschlussleitung 2 verbundenen zweiten Bauteils 11b der Halterungsvorrichtung 1 zu der sensorisch erfassten oder gemeldeten Position der Anschlussbuchse 7. Dann steuert die Steuerung 9 des Roboters 8 im Schritt S3 die Bewegung des Roboterarms 3 derart, dass der Stecker 10, welcher sich an dem zweiten Bauteil 11b der Halterungsvorrichtung 1 befindet, in die Anschlussbuchse 7 automatisch eingesteckt wird. Anschließend können die Bauteile 11a, 11b entriegelt werden. Die erfolgte Entriegelung kann der Steuerung 9 gemeldet werden.

Der Roboterarm 3 des Roboters 8 kann in einem weiteren Schritt S4 das von dem zweiten Bauteil 11b entriegelte erste Bauteile 11a der Halterungsvorrichtung von der Anschlussbuchse 7 wegbewegen, um es beispielsweise zu einer anderen in der Kabelhalterung der Ladesäule befindlichen Anschlussleitung 2 zu führen. Das erste entriegelte Bauteil 11a verbleibt mittels seines Steckers 10 eingesteckt in der Anschlussbuchse 7, so dass über die an dem zweiten Bauteil 11b angebrachte Anschlussleitung 2 ein elektrischer Ladestrom über die Anschlussbuchse 7 zu einer Fahrzeugbatterie des Fahrzeugs fließen kann.

Sobald der Ladevorgang beendet ist, wird das an dem Roboterarm 3 des Roboters 8 befestigte erste Bauteil 11a durch die Steuerung 9 des Roboters 8 in einem fünften Schritt S5 wieder zu dem in die Anschlussbuchse 7 eingesteckten Bauteil 11a geführt. Sobald die beiden Bauteile 11a, 11b erfolgreich miteinander verriegelt worden sind, zieht die Steuerung 9 den an dem zweiten Bauteil 11b vorgesehenen Stecker 10 der Halterungsvorrichtung 1 aus der Anschlussbuchse 7 heraus und befördert die herausgezogene Anschlussleitung 2 im Schritt S5 zurück an die dafür vorgesehene Position in der Kabelhalterung der Ladesäule.

Die Schritte S1 bis S5 können durch einen selbstfahrenden Roboter 8 nacheinander an mehreren in der Nähe mindestens einer Ladesäule geparkten Fahrzeugen vorgenommen werden.

Bei einer möglichen Implementierung sind mehrere zu ladende oder zu betankende Fahrzeuge vor einer Ladesäule abgestellt und werden nacheinander durch einen Roboter 8 bedient. Dies ermöglicht es einem Fahrer eines der abgestellten Fahrzeuge sich für längere Zeit von der Ladesäule zu entfernen und nach seiner Rückkehr sein geladenes bzw. betanktes Fahrzeug vorzufinden.

Der in Fig. 1 dargestellte Roboter 8 weist bei einer möglichen Ausführungsform eine Nutzerschnittstelle zur Eingabe von Auswahlkriterien, gewünschter Ladeart, Ladekapazität, Ladezustand SOC, Fahrzeugtyp und dergleichen durch einen Nutzer bzw. Fahrer auf. Weiterhin kann die Steuerung 9 des Roboters 8 über eine Kommunikationsschnittstelle mit einem gegebenenfalls tragbaren Endgerät des Nutzers kommunizieren. Beispielsweise meldet die Steuerung 9 das Beenden eines Ladevorganges an das Endgerät des Nutzers, so dass dieser das automatisch durch den Roboter 8 geladene Fahrzeug bei der Ladesäule abholen kann und es von der Ladesäule wegfährt. Die Steuerung 9 des Roboters 8 kann über eine weitere Kommunikationsschnittstelle Daten und Informationen mit der in dem Fahrzeug integrierten Fahrzeugsteuerung austauschen. Die über die eingesteckte Anschlussleitung 2 fließende Strommenge bzw. Kraftstoffmenge wird bei einer möglichen Ausführungsform sensorisch erfasst und an die Steuerung 9 gemeldet.

Bei einer möglichen Ausführungsform des Roboters 8 weisen die auswählbaren Anschlussleitungen 2 elektrische Anschlussleitungen, insbesondere Gleichstromanschlussleitungen oder Wechselstromanschlussleitungen auf. Bei einer möglichen Ausführungsform des Roboters 8 weisen die Anschlussleitungen 2 Betankungs-Anschlussleitungen zum Betanken eines Kraftstofftanks des Fahrzeugs mit einem Kraftstoff auf.

Bei einer möglichen Ausführungsform des Roboters 8 ist der Roboter 8 selbstfahrend ausgebildet und ist durch die Steuerung 9 des Roboters 8 an eine sensorisch erkannte oder gemeldete Position des zu ladenden oder zu betankenden Fahrzeuges und zu einer erkannten oder gemeldeten Position der Anschlussbuchse 7 des Fahrzeuges fahrbar.

Die Anschlussbuche 7 befindet sich beispielsweise bei einem ersten Fahrzeugtyp hinten rechts auf 1 m Höhe der Karosserie des Fahrzeugs und bei einem zweiten Fahrzeugtyp hinten links auf 80 cm Höhe an der Fahrzeugkarosserie des Fahrzeugs.

Die Erfindung schafft gemäß einem weiteren Aspekt ein Fahrzeug mit einem Roboter 8, der einen Roboterarm 3 aufweist, wobei an dem Roboterarm 3 des Roboters 8 ein erstes Bauteil 11a der erfindungsgemäßen Halterungsvorrichtung 1 befestigt ist.

Wie in Fig.2 dargestellt weist die Halterungsvorrichtung 1 ein an dem Roboterarm 3 fixiertes erstes Bauteil 11a und ein zweites Bauteil 11b auf, das mit dem ersten Bauteil 11a trennbar verbunden ist. Ein keilförmiger, partiell abgeflachter Einführkonus 4 ist mittels eines Befestigungsflansches 5 des ersten Bauteils 11a an dem Roboterarm 3 befestigt. Es sind elektromagnetischem Rastbolzen 14 eines Verriegelungsmechanismus 11c vorgesehen. Der Verriegelungsmechanismus 11c kann betätigt werden, um sich mit weiteren Teilen des abgeflachten kegelförmigen Verriegelungsmechanismus 11c, die als spiegelbildliche Hohlkörper ausgestaltet sind, zu verbinden, Diese Hohlkörper bzw. Rastbolzenbuchsen 15 befinden sich auf einer Oberfläche des der Einführaufnahme 6 des zweiten Bauteils 11b. Die Rastbolzen 15 werden nach einem erfolgten Steckvorgang des Steckers 10 des zweiten Teils 11b in die Anschlussbuchse 7 aus den Rastbolzenbuchsen 15 der Einführaufnahme des zweiten Bauteils 11b wieder zurückgezogen, so dass das mit Hilfe des Steckers 10 in die Anschlussbuchse 7 eingesteckte zweite Bauteil 11b von dem ersten Bauteil 11a der Halterungsvorrichtung 1 mechanisch wieder gelöst wird. Der Roboterarm 3 hat vorzugsweise mehrere Gelenke und bietet mehrere Freiheitsgrade bei der Bewegung der Halterungsvorrichtung 1.

Die Erfindung erlaubt es mit einem Roboter 8 oder einer roboterähnlichen Maschine unterschiedliche zweite Bauteile 11b bzw. Anschluss-Stecker 11b sicher zu greifen. Der Mechanismus kann für alle von selbstverfahrenden Robotern 8 zum Herstellen einer später wieder lösbaren Steck- bzw. Bajonettverbindung genutzt werden.

Eines der Einsatzgebiete der erfindungsgemäßen Halterungsvorrichtung 1 ist das Stecken von Ladesteckern in BEV (Battery Electrical Vehicles). In der Praxis haben sich in Europa zwei Standards etabliert:
- Typ2 für Laden mit Wechselstrom (AC)
- CCS für das Laden mit Gleichstrom (DC)

Selbst wenn in einem PKW oder einem anderen Fahrzeug die Dose bzw. Anschlussbuchse 7 des Fahrzeuges beide Stecker-Typen fassen kann, so sind die unterschiedlichen Stecker-Typen für den Anschluss nicht normkompatibel in einem Gehäuse zu integrieren. Für eine roboter- oder maschinengestützte elektrische Ladung von Elektrofahrzeugen sind herkömmlicherweise zwei unterschiedliche Ladekabel, je nach Fahrzeugtyp und Ladeart (AC/DC) vorzuhalten. Die herkömmlichen Stecker Typ2 und CCS sind für die manuelle Bedienung ergonomisch geformt. Die erfindungsgemäße Halterungsvorrichtung 1 weist vorzugsweise einen Stecker-/griff auf, der sowohl für eine Maschine als auch für einen Menschen eine leichte und sichere Handhabung ermöglicht. Bis auf die Verbindungsteile zu den jeweiligen Steckern 10 sind die Bauteile identisch. Dadurch kann mit einem gemeinsamen Verfahren eine Maschine bzw. Roboter 8 beide Stecker-Typen sicher manipulieren bzw. betätigen.

Die Gestaltung eines Schafts 13 des zweiten Bauteils 11b (female) ermöglicht eine einfache Bedienung des zweiten Bauteils 11b (Steckerhalters) der Halterungsvorrichtung 1 durch eine menschliche Hand sowie autonome Ver- und Entriegelungsvorgänge, die zum Beispiel durch einen Roboter 8 oder durch eine andere mechanische Vorrichtung durchgeführt werden können.

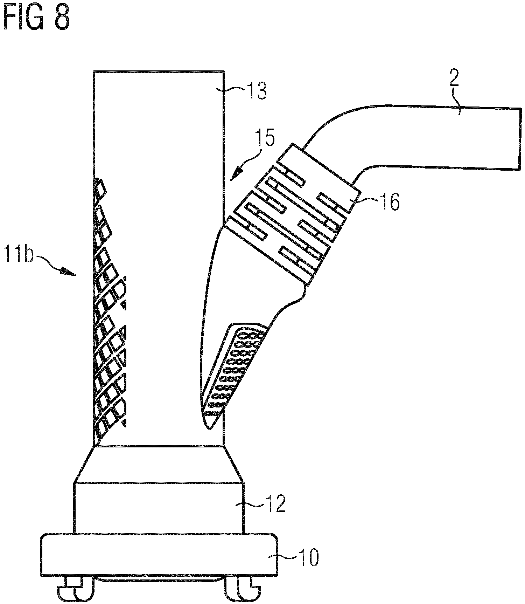

Aus der Keilform des Einführkonus 4 (Male) des ersten Bauteils 11a und der korrespondierenden Innenfläche der Einführaufnahme 6 des zweiten Bauteils 11b (female) ergibt sich ein technischer Effekt dahingehend, dass die Positionierung des ersten Bauteils 11a in Bezug auf das zweiten Bauteil 11b beim Anschließen eines Steckers oder eines Bajonett-Verschlusses nicht sehr genau sein muss. Durch die konische Form ergibt sich mit ihren Rundungen beim Einführen des Einführkonus 4 des ersten Bauteils 11a in die Einführaufnahme 6 des zweiten Bauteils 11b eine Selbstzentrierung, die somit weniger Präzision erfordert. Die gekrümmten Seitenflächen und die abgeflachten Flächen des Einführkonus 4 des ersten Bauteils 11a bewirken zudem, dass der Stecker/Verschluss stabiler gehalten wird, d.h. weniger Möglichkeiten des Wackelns und weniger Möglichkeiten des Verklemmens bestehen. Diese Kraftschlüssigkeit eröffnen ein weiteres Anwendungsfeld für die Halterungsvorrichtung 1 nämlich Schlauch-Verbindungen, die durch Drehung eines Bajonett-Verschlusses geschlossen werden können (z.B. SP- Storz 52 x 1½) wie in Fig. 8 dargestellt.

Der erfindungsgemäße Roboter 8 kann vielseitig eingesetzt werden. Er kann an Tankstellen oder Parkplätzen zum automatischen Laden oder Betanken von Straßenfahrzeugen verwendet werden. Er kann auch zum Laden oder Betanken von Luft-oder Wasserfahrzeugen oder von Tanks industrieller Anlageneingesetzt werden. Neben Kraftstoffen können auch im Zuge von Wartungsmaßnahmen andere Flüssigkeiten durch den Roboter 8 automatisch nachgefüllt werden, beispielsweise Motoröl, Bremsflüssigkeiten oder Wasser für eine Scheibenwischeranlage. Weiterhin kann ein Transporttank eines Transportfahrzeugs mit einer Flüssigkeit oder mit einem Gas mit Hilfe des Roboters befüllt werden (beispielsweise ein Wassertransportfahrzeug oder ein Milchtransporter) . Der Roboter 8 eignet sich auch für den Einsatz in einem sicherheitskritischen Bereich, beispielsweise in einem verstrahlten Gelände.

Bei einer möglichen Implementierung ist der Roboter 8 in der Lage eine vor der Anschlussbuchse 7 befindliche Klappe automatisch zu öffnen oder die Fahrzeugsteuerung des Fahrzeuges dazu zu veranlassen, die Klappe zu öffnen.

Die Halterungsvorrichtung 1 bildet einen zweiteiligen Steckverbindungshalter für elektrische Kabelverbindungen oder für Schlauchanschlüsse mit einem ersten Bauteil 11a, das an einem Roboterarm 3 oder einem alternativen Manipulator befestigt ist und mit einem zweiten Bauteil 11b, an dem das Anschlusskabel 2 und die Steckverbindung befestigt ist, wobei beide Bauteile 11a, 11b bei ihrer mechanischen Verbindung mittels Konus selbst zentriert zusammengeführt werden, um Roboter gestützte Steckverbindungen herstellen und lösen zu können.

Die Steckverbindungen sind dabei aufgrund der geometrischen Form der beiden Teilkomponenten 11a, 11b selbst beim Greifvorgang zentriert. Auch bei anfänglich ungenauer Positionierung der Bauteile 11a, 11b zueinander lässt sich automatisch eine exakte Verbindung dieser Bauteile 11a, 11b herstellen.

Durch einen Sensor kann die korrekte Verbindung beider Teilkomponenten 11a, 11b erfasst und an die Steuerung 9 des Roboters 8 und/oder an die Steuerung eines Fahrzeugs gemeldet werden.

Das Vorsehen einer elektromagnetischen Sperrbolzenverriegelung 11c erlaubt über Strommessung eine Zustandsabfrage der Sperrbolzen 14 des Verriegelungsmechanismus 11c.

Die Halterungsvorrichtung 1 kann bei einer möglichen Ausführungsform sowohl axiale als auch aufgrund der Form kraftübertragende Drehbewegungen vollführen.

Die Halterungsvorrichtung 1 erlaubt es dem Roboter 8, an dem Adapter angebrachte Verbindungen sowohl zu stecken, zu arretieren und zu lösen.

Die Verbindung beider Teilkomponenten 11a, 11b der Halterungsvorrichtung 1 kann mittels eines elektronisch gesteuerten Mechanismus 11c verriegelt werden. Der Mechanismus 11c kann (elektro-) magnetisch betätigt werden oder durch einen Schrittmotor oder ein Servomotor gesteuert werden.

Die Halterungsvorrichtung 1 kann mittels einer Mechanik verriegelt werden, die durch mechanischen Druck ver- bzw. entriegelt. Die Halterungsvorrichtung 1 kann durch Federspannung auf einem Sperrbolzen 14 ohne anliegenden Schaltstrom gesteckt und verriegelt werden.

Die Halterungsvorrichtung 1 kann für Not- oder Sonderfälle manuell entriegelt werden. Somit kann der Steckvorgang bzw. das Lösen des Steckers 11b auch manuell durch einen Menschen erfolgen.

Unterschiedliche Steckverbinder können mittels Adapter 12 an die Teilkomponente 11b mit der Kabel- oder Schlauchverbindung angeschlossen werden.

Das zweite Bauteil 11b weist vorzugsweise einen Schaft 13 zur bessern Montage der Kabel und Komponenten auf, der teilbar ausgestaltet sein kann.

Bei einer mögliche Ausführungsform kann der Roboter 8 mit dem Roboterarm 3 an der Karosserie des Fahrzeugs angebracht sein.

### Weitere Ausführungsformen

1. Halterungsvorrichtung (1) zur Halterung einer Anschlussleitung (2) an einem beweglichen Roboterarm (3),
   wobei die Halterungsvorrichtung (1) ein erstes Bauteil (11a) aufweist, welches an seiner ersten Stirnseite einen Einführkonus (4) und an seiner gegenüberliegenden zweiten Stirnseite einen daran angebrachten Befestigungsflansch (5) zur Befestigung des ersten Bauteils (11a) an den beweglichen Roboterarm (3) hat, wobei das zweite Bauteil (11b) der Halterungsvorrichtung (1) an seiner ersten Stirnseite eine Einführaufnahme (6) zur selbstzentrierenden Aufnahme des Einführkonus (4) des ersten Bauteils (11a) der Halterungsvorrichtung (1) und an seiner zweiten Stirnseite eine erste Anschluss-Schnittstelle für eine Anschlussbuchse (7) hat, wobei das zweite Bauteil (11b) der Halterungsvorrichtung (1) seitlich eine zweite Anschluss-Schnittstelle (16) für die Anschlussleitung (2) aufweist.
2. Halterungsvorrichtung nach Ausführungsform 1, wobei der Einführkonus (4) des ersten Bauteils (11a) einen steuerbaren Verriegelungsmechanismus (11c) zur mechanischen Verriegelung des ersten Bauteils (11a) der Halterungsvorrichtung (1) mit dem zweiten Bauteil (11b) der Halterungsvorrichtung (1) enthält.
3. Halterungsvorrichtung nach einer der vorangehenden Ausführungsformen 1 oder 2, wobei die an der zweiten Stirnseite des zweiten Bauteils (11b) vorgesehene erste Anschluss-Schnittstelle in einem Anschuss-Stecker integriert ist, der durch den beweglichen Roboterarm (3) automatisch in die Anschlussbuchse (7) hineinsteckbar oder aus der Anschlussbuchse (7) herausziehbar ist.
4. Halterungsvorrichtung nach Ausführungsform 1 oder 2, wobei die Anschlussleitung (2) ein elektrisches Anschlusskabel, ein hydraulisches Anschlusskabel oder ein pneumatisches Anschlusskabel aufweist.
5. Halterungsvorrichtung nach Ausführungsform 3, wobei das elektrische Anschlusskabel (2) ein Stromkabel oder ein Übertagungskabel zur Übermittlung von Daten oder Signalen aufweist.
6. Halterungsvorrichtung nach Ausführungsform 1 oder 2, wobei die Anschlussleitung (2) einen Schlauch zum Transport einer Flüssigkeit oder eines Gases aufweist.
7. Halterungsvorrichtung nach einer der vorangehenden Ausführungsformen, wobei das zweite Bauteil (11b) der Halterungsvorrichtung (1) einen Schaft (13) zur manuellen Betätigung der Halterungsvorrichtung (1) aufweist.
8. Halterungsvorrichtung nach einer der vorangehenden Ausführungsformen, wobei an der ersten Anschluss-Schnittstelle des zweiten Bauteiles (11b) der Halterungsvorrichtung (1) ein Anschlussadapter (12) vorgesehen ist.
9. Halterungsvorrichtung nach einer der vorangehenden Ausführungsformen 2 bis 7, wobei der innerhalb des Einführkonus (4) des ersten Bauteils (11a) enthaltene steuerbare Verriegelungsmechanismus (11c) ausfahrbare Rastbolzen (14) aufweist, die nach Einführung des Einführkonus (4) des ersten Bauteils (11a) in die Einführaufnahme (6) des zweiten Bauteils (11b) in entsprechende Rastbolzenbuchsen (15) der Einführaufnahme (6) des zweiten Bauteils (11b) zur Verriegelung des ersten Bauteils (11a) mit dem zweiten Bauteil (11b) einfahrbar sind.
10. Halterungsvorrichtung nach Ausführungsform 8, wobei die ausfahrbaren Rastbolzen (14) des Verriegelungsmechanismus (11c) elektromagnetisch betätigbar sind oder wobei die ausfahrbaren Rastbolzen (14) des Verriegelungsmechanismus (11c) durch einen Servomotor oder einen Schrittmotor betätigbar sind.
11. Halterungsvorrichtung nach Ausführungsform 8, wobei die ausfahrbaren Rastbolzen (14) des Verriegelungsmechanismus (11c) durch Federkraft einer mechanischen Feder oder durch Druckkraft betätigbar sind oder wobei die ausfahrbaren Rastbolzen (14) des Verriegelungsmechanismus (11c) manuell betätigbar sind oder wobei die ausfahrbaren Rastbolzen (14) des Verriegelungsmechanismus (11c) hydraulisch oder pneumatisch betätigbar sind.
12. Halterungsvorrichtung nach einer der vorangehenden Ausführungsformen, wobei eine erfolgte Verriegelung und/oder eine Stellung der Rastbolzen (14) des Verriegelungsmechanismus (11c) durch eine Erfassungseinheit des Verriegelungsmechanismus (11c) erfasst wird.
13. Halterungsvorrichtung nach einer der vorangehenden Ausführungsformen, wobei die Anschlussbuchse (7) eine elektrische Anschlussbuchse für Wechselstrom (AC) oder für Gleichstrom (DC) ist.
14. Halterungsvorrichtung nach Ausführungsform 13, wobei die elektrische Anschlussbuchse (7) für Wechselstrom (AC) eine Typ2-Wechselstromanschlussbuchse und wobei die elektrische Anschlussbuchse (7) für Gleichstrom (DC) eine CCS-Geleichstromanschlussbuchse aufweist.
15. Halterungsvorrichtung nach einer der vorangehenden Ausführungsformen 1 bis 14, wobei die an dem Roboterarm (3) befestige Halterungsvorrichtung (1) um ihre Längsachse herum drehbar ist.
16. Halterungsvorrichtung nach einer der vorangehenden Ausführungsformen 1 bis 15, wobei der Einführkonus (4) des ersten Bauteils (11a) der Halterungsvorrichtung (1) eine kegelförmige Mantelfläche (4A) und eine ebene Mantelfläche (4B) aufweist,
   wobei ausfahrbare Rastbolzen (14) eines Verriegelungsmechanismus (11c) an der ebenen Mantelfläche (4B) des Einführkonus (4) des ersten Bauteils (11a) der Halterungsvorrichtung (1) vorgesehen sind.
17. Roboter (8) mit einem Roboterarm (3), wobei an dem Roboterarm (3) des Roboters (8) ein erstes Bauteil (11a) einer Halterungsvorrichtung (1) nach einer der Ausführungsformen 1 bis 16 befestigt ist.
18. Roboter nach Ausführungsform 17, wobei eine Steuerung (9) des Roboters (8) das an dem Roboterarm (3) befestigte erste Bauteil (11a) der Halterungsvorrichtung (1) in das zweite Bauteil (11b) der Halterungsvorrichtung (1) automatisch einführt, welches an einem vorderen Ende von mindestens einer auswählbaren Anschlussleitung (2) vorgesehen ist, wobei die Steuerung (9) des Roboters (8) nach dem Einführen des ersten Bauteils (11a) der Halterungsvorrichtung (1) in das zweite Bauteil (11b) der Halterungsvorrichtung (1) eine Bewegung des Roboterarmes (3) zum Einstecken des an dem zweiten Bauteil (11b) der Halterungsvorrichtung (1) vorgesehenen Anschluss-Steckers (10) in eine Anschlussbuchse (7) oder zum Herausziehen des an dem zweiten Bauteil (11b) der Halterungsvorrichtung (1) vorgesehenen Anschluss-Steckers (10) aus einer Anschlussbuchse (7) steuert.
19. Roboter nach Ausführungsform 18, wobei die Anschlussbuchse (7) in welche der Roboterarm (3) des Roboters (8) einen Anschluss-Stecker (10) einführt oder aus der der Roboterarm (3) des Roboters (8) einen Anschluss-Stecker (10) herauszieht an einem Fahrzeug vorgesehen ist.
20. Roboter nach einer der Ausführungsformen 17 bis 19 mit Sensoren zur Erkennung einer Position von mindestens einer auswählbaren Anschlussleitung (2) und/oder zur Erkennung einer Position der Anschlussbuchse (7) und/oder zur Erkennung eines Fahrzeugtyps des Fahrzeuges.
21. Roboter nach Ausführungsform 20, wobei die Steuerung (9) des Roboters (8) eine Anschlussleitung (2) in Abhängigkeit des erkannten Fahrzeugtyps des Fahrzeuges auswählt und das an dem Roboterarm (3) des Roboters (8) befestigte erste Bauteil (11a) der Halterungsvorrichtung (1) in das zweite Bauteil (11b) der Halterungsvorrichtung (1) der ausgewählten Anschlussleitung (2) automatisch einführt, welches an einem vorderen Ende der auswählten Anschlussleitung (2) vorgesehen ist.
22. Roboter nach einer der vorangehenden Ausführungsformen 17 bis 21, wobei die auswählbaren Anschlussleitungen (2) elektrische Anschlussleitungen, insbesondere Gleichstromanschlussleitungen oder Wechselstromanschlussleitungen, oder Betankungs-Anschlussleitungen zum Betanken eines Kraftstofftanks des Fahrzeugs mit einem Kraftstoff aufweisen.
23. Roboter nach einer der Ausführungsformen 17 bis 22, wobei der Roboter (8) selbstfahrend ausgebildet ist und durch die Steuerung (9) des Roboters (8) an eine erkannte oder gemeldete Position des Fahrzeuges und/oder zu der erkannten Position der Anschlussbuchse (7) des Fahrzeuges fahrbar ist.
24. Fahrzeug mit einem Roboter (8) nach einer der vorangehenden Ausführungsformen 17 bis 23.

## Patentansprüche

1. Halterungsvorrichtung (1) zur Halterung einer Anschlussleitung (2) an einem beweglichen Roboterarm (3),
wobei die Halterungsvorrichtung (1) ein erstes Bauteil (11a) aufweist, welches an seiner ersten Stirnseite einen Einführkonus (4) und an seiner gegenüberliegenden zweiten Stirnseite einen daran angebrachten Befestigungsflansch (5) zur Befestigung des ersten Bauteils (11a) an den beweglichen Roboterarm (3) hat, wobei das zweite Bauteil (11b) der Halterungsvorrichtung (1) an seiner ersten Stirnseite eine Einführaufnahme (6) zur selbstzentrierenden Aufnahme des Einführkonus (4) des ersten Bauteils (11a) der Halterungsvorrichtung (1) und an seiner zweiten Stirnseite eine erste Anschluss-Schnittstelle für eine Anschlussbuchse (7) hat, wobei das zweite Bauteil (11b) der Halterungsvorrichtung (1) seitlich eine zweite Anschluss-Schnittstelle (16) für die Anschlussleitung (2) aufweist.

2. Halterungsvorrichtung nach Anspruch 1, wobei der Einführkonus (4) des ersten Bauteils (11a) einen steuerbaren Verriegelungsmechanismus (11c) zur mechanischen Verriegelung des ersten Bauteils (11a) der Halterungsvorrichtung (1) mit dem zweiten Bauteil (11b) der Halterungsvorrichtung (1) enthält.

3. Halterungsvorrichtung nach einem der vorangehenden Ansprüche 1 oder 2, wobei die an der zweiten Stirnseite des zweiten Bauteils (11b) vorgesehene erste Anschluss-Schnittstelle in einem Anschuss-Stecker integriert ist, der durch den beweglichen Roboterarm (3) automatisch in die Anschlussbuchse (7) hineinsteckbar oder aus der Anschlussbuchse (7) herausziehbar ist.

4. Halterungsvorrichtung nach Anspruch 1 oder 2, wobei die Anschlussleitung (2) ein hydraulisches Anschlusskabel oder ein pneumatisches Anschlusskabel oder ein elektrisches Anschlusskabel aufweist, wobei das elektrische Anschlusskabel (2) insbesondere ein Stromkabel oder ein Übertagungskabel zur Übermittlung von Daten oder Signalen aufweist.

5. Halterungsvorrichtung nach Anspruch 1 oder 2, wobei die Anschlussleitung (2) einen Schlauch zum Transport einer Flüssigkeit oder eines Gases aufweist.

6. Halterungsvorrichtung nach einem der vorangehenden Ansprüche, wobei das zweite Bauteil (11b) der Halterungsvorrichtung (1) einen Schaft (13) zur manuellen Betätigung der Halterungsvorrichtung (1) aufweist.

7. Halterungsvorrichtung nach einem der vorangehenden Ansprüche 2 bis 6, wobei der innerhalb des Einführkonus (4) des ersten Bauteils (11a) enthaltene steuerbare Verriegelungsmechanismus (11c) ausfahrbare Rastbolzen (14) aufweist, die nach Einführung des Einführkonus (4) des ersten Bauteils (11a) in die Einführaufnahme (6) des zweiten Bauteils (11b) in entsprechende Rastbolzenbuchsen (15) der Einführaufnahme (6) des zweiten Bauteils (11b) zur Verriegelung des ersten Bauteils (11a) mit dem zweiten Bauteil (11b) einfahrbar sind.

8. Halterungsvorrichtung nach einem der vorangehenden Ansprüche 1 - 6, wobei an der ersten Anschluss-Schnittstelle des zweiten Bauteiles (11b) der Halterungsvorrichtung (1) ein Anschlussadapter (12) vorgesehen ist, wobei die ausfahrbaren Rastbolzen (14) des Verriegelungsmechanismus (11c) insbesondere elektromagnetisch betätigbar sind oder wobei die ausfahrbaren Rastbolzen (14) des Verriegelungsmechanismus (11c) insbesondere durch einen Servomotor oder einen Schrittmotor betätigbar sind, oder wobei die ausfahrbaren Rastbolzen (14) des Verriegelungsmechanismus (11c) insbesondere durch Federkraft einer mechanischen Feder oder durch Druckkraft betätigbar sind oder wobei die ausfahrbaren Rastbolzen (14) des Verriegelungsmechanismus (11c) insbesondere manuell betätigbar sind oder wobei die ausfahrbaren Rastbolzen (14) des Verriegelungsmechanismus (11c) insbesondere hydraulisch oder pneumatisch betätigbar sind.

9. Halterungsvorrichtung nach einem der vorangehenden Ansprüche, wobei eine erfolgte Verriegelung und/oder eine Stellung der Rastbolzen (14) des Verriegelungsmechanismus (11c) durch eine Erfassungseinheit des Verriegelungsmechanismus (11c) erfasst wird, und/oder wobei die Anschlussbuchse (7) eine elektrische Anschlussbuchse für Wechselstrom (AC) oder für Gleichstrom (DC) ist, wobei die elektrische Anschlussbuchse (7) für Wechselstrom (AC) insbesondere eine Typ2-Wechselstromanschlussbuchse und wobei die elektrische Anschlussbuchse (7) für Gleichstrom (DC) insbesondere eine CCS-Geleichstromanschlussbuchse aufweist.

10. Halterungsvorrichtung nach einem der vorangehenden Ansprüche, wobei die an dem Roboterarm (3) befestige Halterungsvorrichtung (1) um ihre Längsachse herum drehbar ist, und/oder wobei der Einführkonus (4) des ersten Bauteils (11a) der Halterungsvorrichtung (1) eine kegelförmige Mantelfläche (4A) und eine ebene Mantelfläche (4B) aufweist,
wobei ausfahrbare Rastbolzen (14) eines Verriegelungsmechanismus (11c) an der ebenen Mantelfläche (4B) des Einführkonus (4) des ersten Bauteils (11a) der Halterungsvorrichtung (1) vorgesehen sind.

11. Roboter (8) mit einem Roboterarm (3), wobei an dem Roboterarm (3) des Roboters (8) ein erstes Bauteil (11a) einer Halterungsvorrichtung (1) nach einem der Ansprüche 1 bis 10 befestigt ist.

12. Roboter nach Anspruch 11, wobei eine Steuerung (9) des Roboters (8) das an dem Roboterarm (3) befestigte erste Bauteil (11a) der Halterungsvorrichtung (1) in das zweite Bauteil (11b) der Halterungsvorrichtung (1) automatisch einführt, welches an einem vorderen Ende von mindestens einer auswählbaren Anschlussleitung (2) vorgesehen ist,
wobei die Steuerung (9) des Roboters (8) nach dem Einführen des ersten Bauteils (11a) der Halterungsvorrichtung (1) in das zweite Bauteil (11b) der Halterungsvorrichtung (1) eine Bewegung des Roboterarmes (3) zum Einstecken des an dem zweiten Bauteil (11b) der Halterungsvorrichtung (1) vorgesehenen Anschluss-Steckers (10) in eine Anschlussbuchse (7) oder zum Herausziehen des an dem zweiten Bauteil (11b) der Halterungsvorrichtung (1) vorgesehenen Anschluss-Steckers (10) aus einer Anschlussbuchse (7) steuert, wobei die Anschlussbuchse (7) in welche der Roboterarm (3) des Roboters (8) einen Anschluss-Stecker (10) einführt oder aus der der Roboterarm (3) des Roboters (8) einen Anschluss-Stecker (10) herauszieht insbesondere an einem Fahrzeug vorgesehen ist.

13. Roboter nach einem der Ansprüche 11 oder 12 mit Sensoren zur Erkennung einer Position von mindestens einer auswählbaren Anschlussleitung (2) und/oder zur Erkennung einer Position der Anschlussbuchse (7) und/oder zur Erkennung eines Fahrzeugtyps des Fahrzeuges, wobei die Steuerung (9) des Roboters (8) insbesondere eine Anschlussleitung (2) in Abhängigkeit des erkannten Fahrzeugtyps des Fahrzeuges auswählt und das an dem Roboterarm (3) des Roboters (8) befestigte erste Bauteil (11a) der Halterungsvorrichtung (1) in das zweite Bauteil (11b) der Halterungsvorrichtung (1) der ausgewählten Anschlussleitung (2) automatisch einführt, welches an einem vorderen Ende der auswählten Anschlussleitung (2) vorgesehen ist.

14. Roboter nach einem der vorangehenden Ansprüche 11 bis 13, wobei die auswählbaren Anschlussleitungen (2) elektrische Anschlussleitungen, insbesondere Gleichstromanschlussleitungen oder Wechselstromanschlussleitungen, oder Betankungs-Anschlussleitungen zum Betanken eines Kraftstofftanks des Fahrzeugs mit einem Kraftstoff aufweisen, und/oder wobei der Roboter (8) selbstfahrend ausgebildet ist und durch die Steuerung (9) des Roboters (8) an eine erkannte oder gemeldete Position des Fahrzeuges und/oder zu der erkannten Position der Anschlussbuchse (7) des Fahrzeuges fahrbar ist.

15. Fahrzeug mit einem Roboter (8) nach einem der vorangehenden Ansprüche 11 bis 14.
